# EUROPEAN PATENT APPLICATION

(11) **EP 4 848 620 A1**
(43) Date of publication of application: **02.12.2026**
(21) Application number: 26181329.9
(22) Date of filing: 27.05.2026
(51) Int. Cl.: H04B 10/071, G01M 11/00

(54) **METHODS FOR IDENTIFICATION OF A REMOTE FIBER OPTIC DEVICE AND FIBER OPTIC CASSETTE MODULE DEVICE WITH INTEGRATED FIBER IDENTIFICATION**

(30) Priority: 27.05.2025 US 202519219507
(71) Applicant: Panduit Corp., Tinley Park, Illinois 60487 (US)
(72) Inventor: HUANG, Yu, Tinley Park, 60487 (US); CASTRO, Jose M., Tinley Park, 60487 (US); KOSE, Bulent, Tinley Park, 60487 (US); SEDOR, Thomas M., Tinley Park, 60487 (US)
(74) Representative: Sona, Alessandro

(57) **Abstract**

A method to trace the identification of a remote fiber optic device includes providing a fiber ID device that includes a fiber optic cable with connectors forming at least two highly reflective connections. The distances between each consecutive set of connectors have different lengths, and the fiber ID device is connected to the remote fiber optic device. The method also includes providing test equipment that transmits at least one optical pulse to the fiber ID device remotely through a fiber optic link and measuring a strength of reflected pulses via the test equipment, integrate the reflected pulses as a function of time, and plot the reflected pulses as a function of a length of the fiber. Next, the distances between adjacent reflected pulses is measured via the test equipment, and the different distances between the adjacent reflected pulses are used to identify the fiber ID of the device digitally.

## Description

### FIELD

This disclosure pertains to fiber identification (ID) within telecommunications and data transmission networks, focusing on fiber optic infrastructure. It enhances the identification and traceability of individual fibers, particularly in passive optical networks (PON) for fiber-to-the-home (FTTH). In these networks, a single fiber is split and shared among multiple users, making it crucial to identify affected users accurately during fiber breakage on the user side.

### BACKGROUND

Fiber optic cables are essential for transmitting data over long distances with minimal signal loss. They are widely used in internet infrastructure, telecommunications, data centers, and fiber-to-the-home (FTTH) applications. A key challenge in managing these networks is quickly tracing, locating, and identifying specific fibers, especially during breaks or signal degradation. Current methods, such as color-coding, barcoding, and labeling, are often manual, time-consuming, and prone to human error.

An Optical Time Domain Reflectometer (OTDR) is a key tool for troubleshooting and locating fiber optic faults. It sends high-powered light pulses into the fiber and analyzes the reflected signals in the time domain. These pulses interact with events such as connectors, breaks, cracks, splices, and the fiber's end, allowing the OTDR to pinpoint their locations and identify their types. However, in FTTH networks, using an OTDR for out-of-service troubleshooting during a single subscriber's outage can disrupt service for all users on the network because the network operator has to disconnect the link from the central office and connect the link to the OTDR to look the breakage.

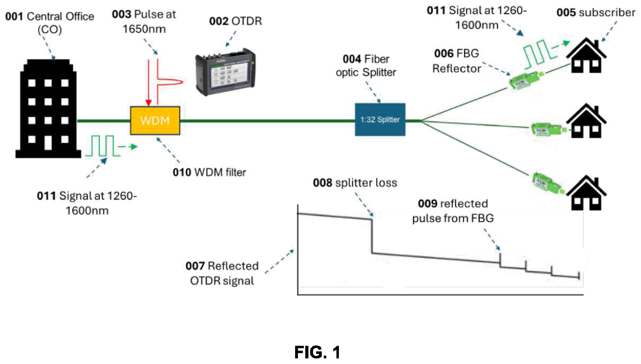

To address this issue, in-service OTDR monitoring has been developed, as shown in Fig. 1. It sends an optical pulse 1650 nm **003** from OTDR **002,** separates from the communication signal at 1260 to 1600 nm **011** sent by central office **001** before it passes through a fiber optic splitter **004** and goes toward subscriber **005.** A Fiber Bragg Grating (FBG) reflector **006** prevents OTDR pulse at 1650 nm **003** from reaching the subscriber **005,** while the wavelength division multiplexing (WDM) filter **010** blocks these pulses from traveling back to the central office **001.** This ensures that network services remain uninterrupted during the OTDR test.

Furthermore, the strong reflected pulse from FBG **009** provides distance information between the central office **001** and subscriber **005,** and the splitter loss **008** represents the splitter location. However, since all the FBG pulses in the reflected OTDR signal **007** are identical, the troubleshooting process becomes challenging, as there is no way to determine which subscriber corresponds to each pulse from the OTDR trace.

To overcome these challenges, there is a need for an innovative traceable fiber optic cable that enables efficient and accurate identification of individual fibers within the network. Implementing such a solution could revolutionize fiber optic network management, enhancing reliability, reducing downtime, and improving cost-effectiveness.

### SUMMARY

A method to trace the identification (ID) of a remote fiber optic device includes providing a fiber ID device that includes a fiber optic cable with optical fiber and a plurality of fiber connectors forming at least two highly reflective connections wherein distances between each consecutive set of connectors have different lengths along the fiber. The method also includes providing test equipment that transmits at least one optical pulse to the fiber ID device remotely through a fiber optic link and then measuring a strength of reflected pulses via the test equipment from the high reflection connections, integrating the reflected pulses as a function of time, and plotting the reflected pulses as a function of a length of the fiber. Next is measuring the distances between adjacent reflected pulses via the test equipment, which are characterized by the distances between the high reflection connections and using the different distances between the adjacent reflected pulses to identify the fiber ID of the device digitally.

### BRIEF DESCRIPTION OF THE DRAWINGS

Fig. 1 shows the in-service OTDR monitoring using OTDR and FBG reflectors.
Fig. 2 shows the proposed passive fiber ID device 019.
Fig. 3A shows a method to make the highly reflective fiber optic connector 016 using recessed fiber.
Fig. 3B shows a mechanical splice, which can also make a high reflection.
Fig. 4A shows the product design of a passive fiber ID device 070.
Fig. 4B shows the passive fiber ID device 070 is connected to a designated port in a high-density MPO-LC cassette 081 to represent the ID of this cassette.
Fig. 5 shows an alternative passive fiber ID device 020.
Fig. 6 shows the product design of the passive fiber ID device 020.
Fig. 7 shows the application of a fiber ID device for in-service OTDR monitoring at FTTH.
Fig. 8 shows the proposed passive fiber ID device with a digitalized pulse intensity 040.
Fig. 9 shows a passive fiber ID device with a digitalized pulse distance and intensity 050.

### DETAILED DESCRIPTION

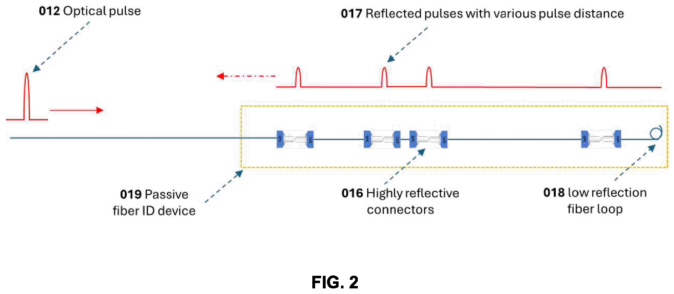

This disclosure introduces a passive fiber ID device **019** that can assign a unique serial number (SN) to the cable, as shown in Fig. 2. It sends an optical pulse **012** to a serial of highly reflective fiber optic connectors **016.** These connectors subsequently reflect a series of pulses **017** back, which can represent a serial number by measuring the length between adjacent pulses. A low reflection fiber loop **018** at the right end of the series of connectors **016** clears the reflection at the end to minimize its interference with the reflective pulses **017.**

The minimum distance between reflective events that OTDR can measure is the event dead zone (EDZ). Most high-end OTDRs have an EDZ as short as 1 to 2 meters. Some high-resolution OTDR has EDZ of about 0.1 to 0.2 meters. In this setup, the fiber lengths between adjacent connections are varied, for example, 2, 1, and 5 meters, respectively. As a result, the distances between the reflective pulses **017** observed on the OTDR are also 2, 1, and 5 meters, respectively. By assigning specific fiber length values to represent decimal digits (e.g., 1 meter for digit 0 and 10 meters for digit 9), we can encode a serial number within the fiber layout. Based on this encoding scheme, the measured distances correspond to the serial number "104" for this device. With the possible serial number range from 000 to 999, 10^3 = 1000 different serial numbers for three decimal digits. This is more than enough for a passive optical network (PON) in FTTH, which usually has no more than 256 users.

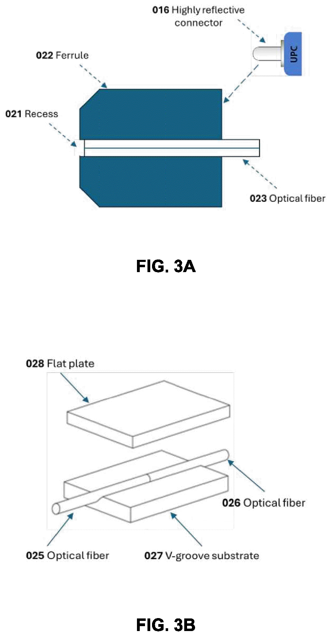

Fig. 3A illustrates a fabrication method to manufacture the high-reflective fiber optic connector **016.** Here, the optical fiber 023 is recessed a few microns below the ferrule endface 022, creating a small air gap when mated with another recessed or non-recessed connector. This air gap results in a 7% reflection, significantly higher than standard connector pairings. Fig. 3B illustrates a mechanical splice that aligns two optical fibers, **025** and **026,** within a V-groove, **027.** Due to imperfections in the fiber endfaces resulting from the cleaving process, such as chips, lips, or deviations from the ideal angle, an air gap typically exists between the two endfaces. This air gap leads to a reflection of approximately 7% as well.

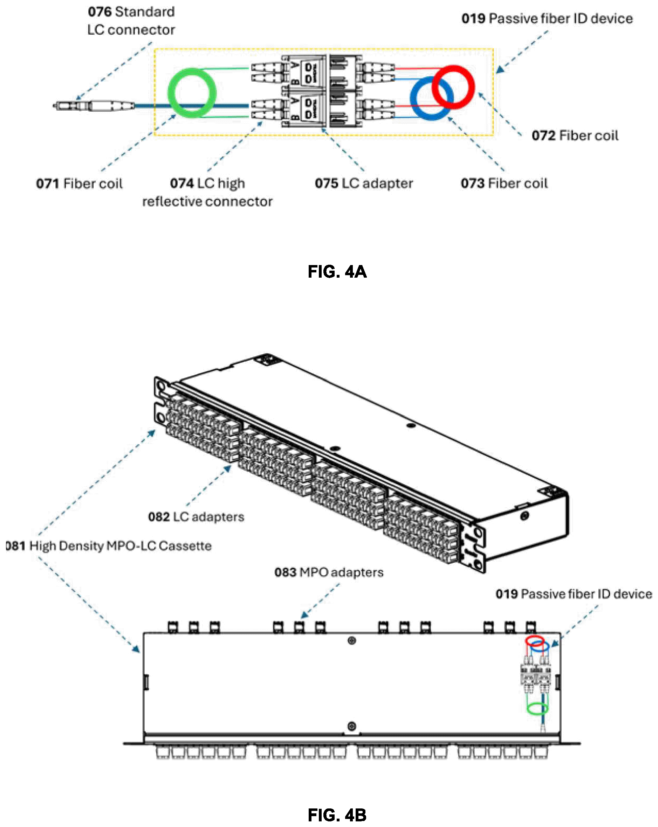

In some equipment with a lot of fiber ports, there is a need to assign an ID to the equipment for tracing and identifying. We can designate a fiber port to connect a passive fiber ID device. Fig. 4A shows the product design of the passive fiber ID device **019.** It has a standard LC connector **076** connected to a serial of LC high reflective connectors **074** jointed by LC adapters **075.** The distances between these LC high reflective connectors are defined by the length of fiber coils **071, 072,** and **073,** which contain the ID information. It is designed to be attached to an independent adapter port of equipment and provides the ID information of that equipment. Fig. 4B shows a high-density MPO-LC cassette **081** with multiple LC adapters 082 at the front side and MPO adapters 083 at the backside. Here, the passive fiber ID device **019** is connected to a designated port in the high-density MPO-LC cassette **081** to represent the ID of this cassette **081.**

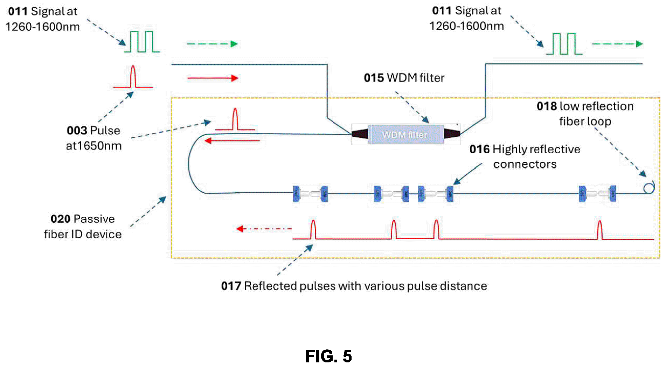

Fig. 5 shows an alternative passive fiber ID device **020** that utilizes the existing communication fiber link instead of using a designated fiber cable to retrieve the ID information. The communication signals in the 1260 to 1600 nm range **011** pass through a WDM filter **015** unimpeded. However, the OTDR pulse at 1650 nm **003** is reflected by the WDM filter **015** and encounters the highly reflective fiber optic connectors **016.** These connectors subsequently reflect a series of pulses **017** back to the OTDR, which can represent a serial number by measuring the length between adjacent pulses. The design ensures the communication fiber link works without disruption when the OTDR sends pulse **003** to retrieve the ID information.

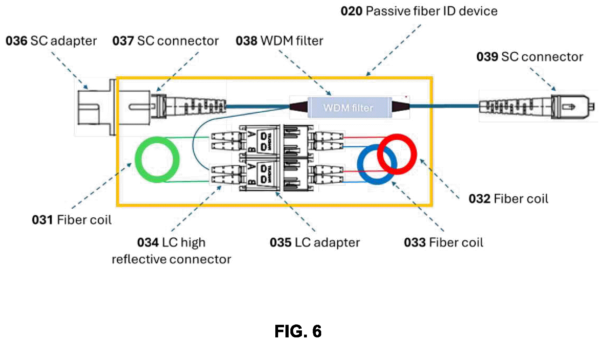

Fig. 6 shows the product design of the passive fiber ID device **020.** It has a standard SC connector **037** connected to an SC adapter 036 on one side and a WDM filter 038 on the other. The reflective port of the WDM filter **038** is connected to a serial of LC high reflective connectors **034** jointed by LC adapters **035.** The distances between these LC high reflective connectors are defined by the fiber coils **031, 032,** and **033.** The transmission port of the WDM filter **038** is connected to a standard SC connector **039.**

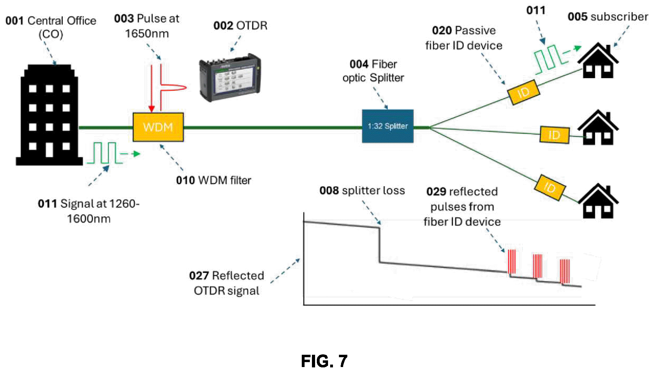

Fig. 7 shows the application of a fiber ID device for in-service OTDR monitoring at FTTH. Here, the passive fiber ID device **020** replaces the FBG reflector **006** in Fig. 1. Therefore, reflected pulses from the fiber ID device **029** will show up at the reflected OTDR signal **027,** telling the network operator the exact subscriber when fiber breakage happens to this subscriber.

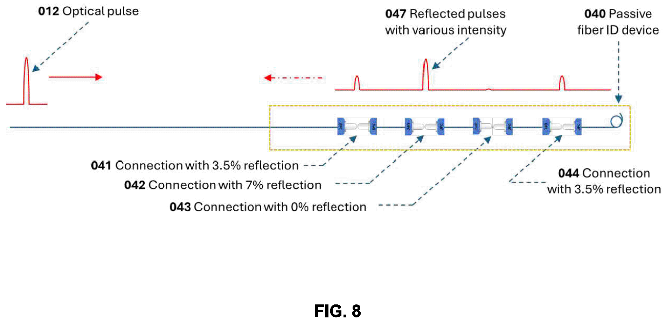

Fig. 8 shows another passive fiber ID device with a digitalized pulse intensity **040.** Instead of digitalized pulse distance in passive fiber ID device **020** in Fig. 2, passive fiber ID device **040** has equal pulse distance but various reflections, such as 0%, 3.5%, and 7%, each can represent digit "0", "1", and "2" in a ternary system. A 7% reflection occurs when there is an air gap between the two connectors. A 3.5% reflection can be achieved by introducing an air gap while applying an anti-reflection coating to one of the connector endfaces. To gain 0% reflection, both connector endfaces must have an anti-reflection coating while maintaining the air gap.

In Fig. 8, connections **041, 042, 043,** and **044** reflect 3.5%, 7%, 0%, and 3.5%, representing a ternary series number of "1201". There are four pulses, each with three possible intensity levels, a total of 3^4 = 81 different combinations, hence 81 different possible ID numbers.

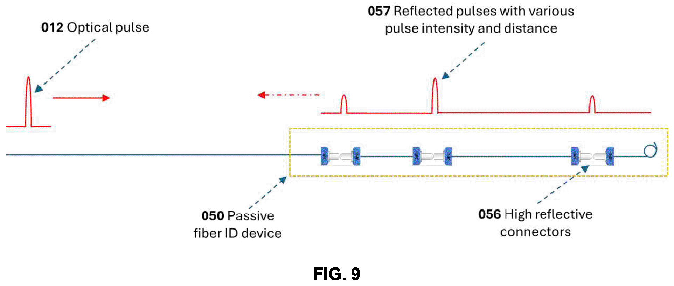

Moreover, we could have a passive fiber ID with digitalized pulse distance and pulse intensity. Fig. 9 shows another passive fiber ID device with various pulse intensities and distances **050.** Here, the two pulse distances between the high reflective connectors **056** in the reflected pulses **057** can represent decimal digits between 0 and 9. Hence, they can represent from 00 to 99, a total of 100 different ID numbers.

We will not use 0% reflection for the pulse intensity as it will confuse the pulse distance. We will only use 3.5% reflection to represent digit "0" and 7% reflection to represent digit "1", giving two choices for each pulse. Therefore, the three pulse intensities can provide 2^3 = 8 different combinations. Combining the digital intensity of these pulses and the two decimal digital pulse distances, we can have 8 × 100 = 800 ID numbers, which is more effective than using digital pulse distance or digital pulse intensity alone.

While exemplary embodiments are described above, it is not intended that these embodiments describe all possible forms of the invention. Rather, the words used in the specification are words of description rather than limitation, and it is understood that various changes may be made without departing from the scope of the invention. Additionally, the features of various implementing embodiments may be combined to form further embodiments of the disclosure.

### References

[1] L. J. Sargent, M. Webster, I. H. White, P. J. Heard, R. V. Penty, M. R., T. Tan, and D. G. Cunningham, "Simple technique for bandwidth enhancement of multimode fiber links using controlled spatial emission from vertical cavity surface emitting lasers," Electron. Lett., vol. 34, pp. 2038-2040, Oct. 1998.
[2] L. Raddatz, I. H. White, D. G. Cunningham, and M. C. Nowell, "Influence of restricted mode excitation on bandwidth of multimode fiber links," IEEE Photon. Technol. Lett., vol. 10, pp. 534-536, Apr. 1998.
[3] M. Webster, L. Raddatz, I. H. White, and D. G. Cunningham, "A statistical analysis of conditioned launch for gigabit ethernet links using multimode fiber," J. Lightwave Technol., vol. 17, pp. 1532-1541, Sept. 1999.
[4] IEC Specification for Multimode launch conditions, IEC TR 62614-2, July 2015.
[5] J. Castro, R. Pimpinella, B. Kose, and B. Lane, "Investigation of the Interaction of Modal and Chromatic Dispersion in VCSEL-MMF Channels," IEEE-OSA J. Lightw. Technol., vol. 30, no. 15, pp. 2532-2541, Aug. 2012.
[6] TIA Specification for 850-nm Laser Optimized, OM4 MMF TIA-492AAAD, Sept. 2009.
[7] J. M. Castro, R. Pimpinella, B. Kose, P. Huang, A. Novick and B. Lane, "Modal-Chromatic dispersion interaction effects for 850 nm VCSEL channels at 100 Gb/s per wavelength", J. Lightw. Technol., vol. 39, no. 7, pp. 2067-2076, Apr. 2021.
[8] TIA DMD Measurement of Multimode Fiber in the Time Domain, TIA-455-220-A, January 2003.

## Claims

1. A method to trace the identification (ID) of a remote fiber optic device comprising:
providing a fiber ID device that includes a fiber optic cable with optical fiber and a plurality of fiber connectors forming at least two highly reflective connections, wherein distances between each consecutive set of connectors have different lengths along the fiber, and wherein the fiber ID device is connected to the remote fiber optic device to be identified;
providing test equipment that transmits at least one optical pulse to the fiber ID device remotely through a fiber optic link;
measuring a strength of reflected pulses via the test equipment from the high reflection connections, integrate the reflected pulses as a function of time, and plot the reflected pulses as a function of a length of the fiber;
measuring the distances between adjacent reflected pulses via the test equipment, which are **characterized by** the distances between the high reflection connections; and
using the different distances between the adjacent reflected pulses to identify the fiber ID of the device digitally.

2. The fiber ID device of claim 1, wherein the reflected pulses are at least 0.2%.

3. The fiber ID device of any preceding claim, wherein the reflected pulses are no more than 90%.

4. The fiber ID device of any preceding claim, wherein the measured distance between adjacent reflected pulses fall into at least two different levels, corresponding to a binary digit.

5. The fiber ID device of any preceding claim, wherein the test equipment transmits the optical pulse with a width of no more than 100 nanoseconds.

6. The fiber ID device of any preceding claim, wherein communication wavelengths will bypass the fiber ID device through a wavelength multiplexing division (WDM) filter, and a wavelength of the ID test will be connected to the fiber ID device through the WDM filter.

7. A method to trace the identification (ID) of a remote fiber optic device comprising:
providing a fiber ID device that includes a fiber optic cable with optical fiber and a plurality of fiber connectors forming at least two highly reflective connections, where distances between each consecutive set of connectors have different lengths along the fiber;
providing a fiber ID device that includes an optical fiber and a serial of fiber connectors forming at least one fiber optic connection, where reflections of the at least one connection are preset to different values, wherein the fiber ID device is connected to the remote fiber optic device to be identified;
providing test equipment that sends at least one optical pulse to the fiber ID device remotely through a fiber optic link;
measuring via the test equipment intensity of reflected pulses, which are **characterized by** the reflections of the at least one connection;
using different levels of reflected pulse intensity to identify the fiber ID of the device digitally.

8. The fiber ID device of claim 7, wherein intensity of the reflected pulses fall into at least two different levels, corresponding to a binary digit.

9. The fiber ID device of any of claims 7 to 8, wherein intensity of the reflected pulses at a low level fall into a level zero, corresponding to a zero digit.

10. The fiber ID device of any of claims 7 to 9, wherein the distances between the adjacent fiber optic connections are no more than 100 meters.

11. The fiber ID device of any of claims 7 to 10, wherein the test equipment transmits the optical pulse with a width of no more than 100 nanoseconds.

12. The fiber ID device of any of claims 7 to 11, wherein the communication wavelengths will bypass the fiber ID device through a wavelength multiplexing division (WDM) filter, and the wavelength of the ID test will be connected to the fiber ID device through the WDM filter.

13. A fiber optic cassette module device with integrated identification (ID) comprising:
a top surface, bottom surface, right surface, left surface, front surface supporting a plurality of fiber optic adapters, and rear surface supporting a plurality of fiber optic adapters;
a plurality of fiber optic patch cords located within the cassette module that attaches adapters along the front surface to adapters along the rear surface;
a fiber optic adapter ID port located along the front surface; and
a passive fiber ID device located within the cassette module with a standard patchcord with one near-end connector that mates to the fiber optic adapter ID port along the front wall of the device with one far-end connector mated into an adapter located inside of the cassette module and a plurality of fiber optic patch cords forming at least two highly reflection connections, wherein the distances between each consecutive set of connectors have different lengths along the fiber.

14. The fiber optic cassette module device of claim 13, where flanges are located on the left and right walls for mounting to the equipment rack.
